# EUROPEAN PATENT SPECIFICATION

(11) **EP 3 966 030 B1**
(45) Date of publication and mention of the grant of the patent: **28.08.2024**
(21) Application number: 20760527.0
(22) Date of filing: 11.05.2020
(51) Int. Cl.: B32B 5/02, B32B 5/26, D04H 1/4374, D04H 1/50, D04H 1/541, D04H 3/018, D04H 3/147, D04H 3/16

(54) **PROCESS FOR THE PRODUCTION OF A MULTILAYER FABRIC**
VERFAHREN ZUR HERSTELLUNG EINES MEHRSCHICHTIGEN GEWEBES
PROCÉDÉ DE PRODUCTION D'UN TISSU MULTICOUCHES

(30) Priority: 10.05.2019 EP 19173930
(43) Date of publication of application: 16.03.2022
(73) Proprietor: FARE' S.p.A., 21054 Fagnano Olona (VA) (IT)
(72) Inventor: FARE', Rosaldo, 21054 Fagnano Olona VA (IT)
(74) Representative: Gislon, Gabriele
(86) International application number: PCT/IB2020/054440
(87) International publication number: WO 2020/230006

(56) References cited:
- EP-A1- 1 340 848
- EP-A1- 3 321 407
- WO-A1-03/055674
- WO-A1-03/055675
- US-A1- 2017 203 539

## Description

### FIELD OF THE INVENTION

The present invention concerns a process for the production of a multilayer fabric, and in particular of multilayer fabrics comprising a non-woven fabric, of the spunbond type.

### KNOWN PRIOR ART

As known, non-woven spunbond fabrics are obtained by extruding, drawing and deposition of a plurality of plastic filaments on a conveyor belt. The filaments deposited on the belt are thus constrained or interlaced together in a plurality of points by means of different processes, such as for example calendering, applying a jet of air or water, or bonding, etc.

A typical plant for producing spunbond filaments comprises a spinning head fed by extruders, a drawing unit and a deposition unit for deposition of the drawn filaments on a mobile support (collecting surface) where the non-woven fabric is formed.

The non-woven fabrics of the spunbond type are used in different fields, such as for example in the medical, hygienic-sanitary, filtration and clothing fields, but also in the geotechnical field, in civil engineering and in building construction. Depending on the application, the non-woven fabric must have different mechanical characteristics in terms of finishings, resistance to particular agents, etc., able to meet the different requirements of the sectors of use.

In particular, different non-woven fabrics of different aesthetic appearance are known. For example, in the hygienic-sanitary, filtration and clothing fields, non-woven fabrics which are completely bulgy or with bulgy zones localized in predefined areas of the surface are known. The transport of such non-woven fabrics is inconvenient due to their size, since they incorporate a significant amount of air, which increases the volume of the product.

Moreover, again due to the dimensions, such non-woven fabrics are difficult to apply to final products, for example in the production of diapers or sanitary protections or in other fields where a high production speed is required since the volume penalizes the length, thus requiring frequent roll changes.

Different fabrics with folds, patterns and drawings, typically for aesthetic reasons, are also known. Such fabrics are complex to produce.

Non-woven fabrics obtained from filaments made from two or more components, so that to be able to exploit the different characteristics of the materials used, are known in the art.

For example, it is known to arrange two polymeric materials in a side-by-side configuration. In the side-by-side arrangement, two polymeric materials are coextruded, so that to form a multicomponent filament in which the two materials form two sub-filaments arranged side-by-side to each other. Typically, the multicomponent filament has circular section, and the two sub-filaments have semicircular section. In other words, the section of the contact surface between the two filaments substantially coincides with the diameter of the section of the multicomponent filament. It is also known to vary the ratio between the two components. In this case, the contact surface between the two sub-filaments coincides with a chord of the circular section of the multicomponent filament. Similar side-by-side filaments are for example described in US 5382400 and US 2013/0029555.

It is also known to select the materials of the two sub-filaments with different characteristics so that to cause the multicomponent filament to crimp. Such a configuration is used for providing the final nonwoven fabric with increased softness and volume, among other things.

For example, the two sub-filaments can be made up of materials having different features, whereby the multicomponent filament is initially extruded and drawn, thus forming a non-crimped continuous filament. When the multicomponent filament is deposited on the collector, the two sub-filaments behave differently, thus crimping the multicomponent filament.

Similarly, the two sub-filaments may be made up of materials having different coefficients of thermal expansion. By subjecting the multicomponent filament to heat treatment, the two sub-filaments expand/shrink differently one from the other, thus crimping the multicomponent filament.

Furthermore, it is known to make the two sub-filaments of materials different from one another, resulting in uneven stresses between the two sub-filaments during the extrusion and drawing steps that cause the multicomponent filament to be crimped. Processes are known, wherein crimp develops before the fibers are deposited on the collecting mat, for example by exploiting a diffuser arranged downstream of the means to carry out the drawing of the filaments, to activate the natural crimp of the fibers, which are thus deposited in an already partially crimped condition on a conveyor belt before being further crimped by means of specific treatments.

However, non-woven fabrics with crimped filaments generally have poor mechanical properties, in particular a relatively low tensile strength,

US2017/203539 describes a multilayer fabric, comprising at least a first layer bound to a second layer, so as to form bound regions and unbound regions. The first layer has greater shrinkage capacity than the second layer during a heat treatment. WO 03/055675 describes another multilayer fabric, comprising a first layer and a second layer joined together in zones, and then heated, so as to cause a different shrinkage of the layers. WO 03/055674 discloses a multilayer fabric comprising at least two layers provided with filaments having different crimp. During heat treatment, the two layers tshrink differently. Crimp formation can be aided mechanically. EP 3321407 discloses a crimpable filament.

Object of the present invention is therefore to produce a fabric provided with a non-woven spunbond fabric with high crimping, and thus volume, level.

A further object of the present invention is to produce such non-woven fabric that is easy to transport.

A further object of the present invention is to produce a non-woven fabric that can be easily coupled with the final product.

A further object of the present invention is to implement a process which allows to easily modify the aesthetic appearance of a non-woven fabric.

A further object of the present invention is to produce a multilayer fabric that is voluminous while maintaining good mechanical properties.

### SUMMARY OF THE INVENTION

These and further objects are achieved by the present invention as described in one or more of the accompanying claims.

In particular, an aspect of the present invention concerns a process for producing a multilayer fabric comprising the steps of: (a) feeding at least a first fabric and a second fabric to a constraining device, wherein the first fabric is a non-woven fabric, comprising a plurality of filaments adapted to develop a crimp; (b) constrain the first and second fabric to each other, so that to define a plurality of constraining points or zones between the first fabric and the second fabric, and so that the first and second fabric are superimposed; (c) heating the first and second fabric, constrained to each other, so that the filaments of the first fabric develop a crimp, thus increasing the thickness of the first fabric and shrinking the length and the width of the first fabric, the shrinking of the first fabric being greater than the shrinking of the second fabric.

Preferably, the filaments of the first fabric are bicomponent filaments.

The first and second fabric combination allows to obtain the desired mechanical characteristics. Moreover, the different behavior during the heat treatment allows to obtain different aesthetic effects, depending on the position of the constraining points or zones.

In fact, the second fabric remains integral with the first fabric at the constraining points, while the remaining portions of the second fabric are deformed by the shrinkage of the first fabric.

Moreover, given that the two fabrics are constrained to each other, it is possible to store the semi-finished product obtained in the constraining step (b), for example before the heating step (c). A possible storage solution provides rolling up the semi-finished product on a bobbin or similar element. This way, it is possible to heat treat, i.e. to carry out the step (c), in a different place and/or at a different time. For example, it is possible to carry out step (c) on a production line of the final product, such as for example a diaper.

In particular, according to a possible embodiment, step (c) is carried out in a different plant with respect to steps (a) and (b). In particular, a possible aspect of the present invention provides that a storage step of the semi-finished product obtained by steps (a) and (b), and the transport of the semi-finished product to a plant for carrying out said step (C), are carried out between steps (b) and (c).

Thanks to this, it is for example possible for a fabric manufacturer to produce the semi-finished product (i.e. the first and second fabric coupled with each other) and to send it to the relative customers, who can carry out the heat treatment, thus causing the crimping of the filaments of the first fabric. Thanks to this, the shipping of the semi-finished product allows to move a greater quantity of product per volume unit, given that the semi-finished product still has not increased its volume (or thickness at least) due to the heat treatment.

As mentioned above, the arrangement of the constraining points or zones allows to define the behavior of the product during the heat treatment, According to a possible aspect, the constraining points or zones are arranged along lines adapted to define, in a plan view, a plurality of closed figures, so that, due to the greater shrinking of the first fabric with respect to the second fabric during the heating step, bulgy zones form in the second fabric at said closed figures.

Although a first and second fabric have been discussed, it is possible to use further fabrics, so that to provide further layers to the multilayer fabric. In fact, embodiments of the present invention provide for the presence of a third fabric. In such embodiments, in step (b), the first fabric is constrained to the second and third fabric by means of the constraining device, so that to be interposed between the second and third fabric. In step (c), the first fabric contracts/shrinks more with respect to both the second fabric and the third fabric. Preferably, the shrinking of the second is substantially identical to the shrinking of the third fabric.

Various types of constraining devices can be used. Preferred embodiments provide for a constraining device selected between a needle loom, a device adapted to supply a glue, a device adapted to carry out an ultrasonic bonding, or a device able to apply a seam. Preferably, the constraining device is a device able to carry out an ultrasonic bonding.

As discussed above, the various fabrics can be selected so that to provide the desired mechanical characteristics to the multilayer fabric. The tensile strength of the first fabric is lower than the tensile strength of the second fabric and preferably, if present, also than the tensile strength of the third fabric.

The fabrics composing the multilayer fabric can be produced by the same plant (i.e. "in line") with respect to the constraining device, or can be produced ready-to-use, for example products found on the market.

An aspect of the present invention concerns a process wherein step (a) comprises the step (i) of depositing a plurality of filaments adapted to be crimped on a first deposit surface so that to form the first fabric. In particular, step (a) can comprise the steps of: (a') depositing a plurality of filaments on a second deposit surface; (a") consolidating the plurality of filaments on to each other, preferably by calendering, to obtain the second fabric; (a‴) carrying out the mentioned step (i) to obtain the first fabric. The second fabric acts as the first deposit surface.

According to a possible aspect, the filaments of the first fabric are deposited on the deposit surface in a substantially non-crimped condition. It should be noted that the difference between the crimped and non-crimped condition of a filament is known to the field technician and, in particular, in a non-crimped condition the filaments are substantially free from crimps. On the other hand, crimped filaments have a plurality of crimps and a wavy and irregular pattern, such that the length of a crimped filament is significantly less than the length of the same filament in a non-crimped condition. The filaments of the present invention are deposited in a non-crimped way. When the non-crimped filaments are deposited, they thus have a "crimping percentage" typically greater than 50%, and preferably greater than 70%. The crimping percentage can be, for example, measured by placing two marks spaced from each other on a filament to be tested, and by measuring the distance between the two marks along a straight line. The same filament is thus extended (i.e. becomes straight, without substantially deforming - i.e. lengthening - the filament), and the distance between the two marks is measured again. The percentage ratio between the first value and the second value of the distance, as known, provides the crimping percentage value.

A further definition of crimped filaments is for example provided in the patent application Reifenhauser US20090152757, according to which crimped filaments are considered to be those with a radius of curvature of less than 5 mm in relaxed state.

According to a possible aspect, the heating step Is carried out at a temperature selected as a function of the type of polymer used in the production of filaments; suitable temperatures are generally between 80 and 190°C, depending on the melting points of the polymers used in the production of the multilayer fabric.

According to a possible aspect of the present invention, the heat treatment for bulk-ing the non-woven fabric provides for a preheating step of the non-woven fabric, which precedes the heating step and which is carried out at a lower temperature with respect to the temperature of the heating step. Typically, the temperature difference between the preheating step and the heating step is greater than 5 degrees, preferably greater than 10 centigrade degrees.

The heating step favors the development of the crimp and also the strengthening of the structure of the multilayer fabric.

According to a possible aspect, during step (i), at least part, preferably all of the bicomponent filaments is/are coextruded from two different materials, so that to form two sub-filaments adhered to each other, according to the side-by-side arrangement, in which, in section, the contact surface between a first sub-filament and a second sub-filament has at least one inflection point, wherein the first sub-filament forms at least one protrusion inside the second filament. Such protrusion has a decreasing width.

According to possible embodiments, the second and/or the third fabric, if present, is a woven fabric, a knit fabric or a non-woven fabric.

An aspect of the present invention concerns a multilayer fabric comprising a first fabric and a second fabric superimposed onto each other, wherein the first fabric is a non-woven fabric comprising a plurality of crimped filaments, and wherein the first fabric and the second fabric are constrained to each other in a plurality of constraining points or zones. In possible embodiments, the second fabric has a plurality of bulgy zones between the constraining points or zones.

As mentioned above, the heating of the multilayer fabric can occur after the storage and shipment of the semi-finished non-woven fabric.

An aspect of the present invention thus also concerns a multilayer fabric comprising a first fabric and a second fabric superimposed onto each other, wherein the first fabric is a non-woven fabric comprising a plurality of filaments adapted to be crimped. The first fabric and the second fabric are constrained to each other in a plurality of constraining points or zones. The first fabric and the second fabric are configured so that, following a heating, the filaments of the first fabric develop a crimp, thus increasing the thickness of the first fabric and shrinking the length and the width of the first fabric, the shrinking of the first fabric being greater than the shrinking of the second fabric.

According to a possible aspect, the points are arranged along lines, preferably straight or curved lines, adapted to define a pattern on the multilayer fabric, preferably a repetitive pattern, preferably formed by a plurality of closed figures.

### BRIEF DESCRIPTION OF THE DRAWINGS

With reference to the accompanying figures, non-limiting exemplary embodiments of the present invention are now described, in which:
- figure 1 is a schematic view showing different steps of a method for the production of a multilayer fabric according to a possible embodiment of the present invention;
- figure 1A is an enlarged detail of figure 1;
- figure 2 is a schematic view showing different steps of a method for the production of a multilayer fabric according to a possible alternative embodiment of the present invention;
- figure 3 is a schematic plan view of a multilayer fabric portion according to a possible embodiment of the present invention, previously to the heating step; the imaginary lines, along which the constraining points are arranged, are shown with dotted line;
- figure 4 is a plan view of a portion of a multilayer fabric according to a possible embodiment of the present invention, previously to the heating step;
- figure 4A is a schematic view of the fabric portion section of figure 4;
- figure 5 is a plan view of a portion of the multilayer fabric of figure 4, following the heating step;
- figure 5A is a schematic view of the fabric portion section of figure 5;
- figure 6 is a plan view of a portion of a multilayer fabric according to a possible alternative embodiment of the present invention, following the heating step;
- figure 7 is the cross section of a possible bicomponent filament which forms the first fabric of a multilayer fabric according to a possible embodiment of the present invention;
- figure 8 is the cross section of a possible bicomponent filament which forms the first fabric of a multilayer fabric according to a possible alternative embodiment of the present invention.

### DETAILED DESCRIPTION OF SOME EMBODIMENTS OF THE INVENTION

A multilayer fabric 100 comprises at least a first fabric 101 and a second fabric 102. The first fabric 101 is a non-woven fabric, comprising a plurality of filaments 1 adapted to be crimped, preferably bicomponent filaments.

The filaments 1 are configured so that to develop a crimp when heated. Typically, this is due to the different behavior of the components of the filament 1 (i.e. sub-filaments 2a, 2b which form the filament 1) when heated.

Typically, at least 50% of the filaments composing the first fabric 101 are filaments 1 configured so that to develop a crimp, more preferably at least 75%, even more preferably at least 90%. In possible solutions, 100% of the filaments of the first fabric 101 are filaments 1 adapted to develop a crimp when heated.

In preferred embodiments, such as for example the ones shown in figures, the filaments 1 preferably comprise two sub-filaments 2a, 2b, obtained by co-extruding two typically polymeric materials A, B. The sub-filaments 2a, 2b are arranged in a side-by-side arrangement.

The materials A, B for the two sub-filaments 2a, 2b are preferably selected among PP, coPP (coPP understood as copolymer PP), PE, coPE, PET, coPET, PBT, PA, PLA. Preferred combinations are: PP/PP, PP/CoPP, PP/PE, PET/PP, PET/CoPET, PET/PBT, PA/PP, PLA/PP, PLA/PE. In particular, the PP/PE, PET/coPET and PET/PBT combinations proved to be particularly suitable for the present invention.

According to a further aspect, the materials are oriented, i.e. not amorphous, to favor (during a heat treatment) the size variation of the sub-filaments in one direction, so that to allow an increased crimping of the filament and thus the increase in volume of the non-woven fabric.

According to a preferred aspect, the sub-filament materials 2a, 2b are selected so that the melting temperature T1 of the first sub-filament 2a is different by at least 10°C with respect to the melting temperature T2 of the second filament, more preferably by at least 20°C. In some embodiments, as mentioned above, it is possible to use two different types (i.e. two different "grades") of the same material (for example two different types of PP), as long as the condition relative to the aforesaid melting temperature difference is met.

Preferably, the two materials also have different viscosity with respect to each other, with a difference of at least 20% between the two values when measured with the same method. In other words, the difference between the viscosity µ1 of the first sub-filament 2a and the viscosity µ2 of the second filament is greater than 20%.

As described above, the two materials (i.e. the materials with which the two sub-filaments 2a, 2b are formed) can be tested with the same viscometer (for example rotational or capillary) or, more generally, the viscosity can be determined by a common method defined in a recognized standard (for example ASTM D3835).

In general, the sub-filament made up of material with lower melting temperature also has lower viscosity.

As mentioned above, the side-by-side arrangement provides that the two sub-filaments 2a, 2b are arranged side-by side to each other, so that the section of the multicomponent filament 1 has two regions distinct from each other. In other words the two sub-filaments 2a, 2b, in section, are separated by a line representing the contact surface 3.

The materials A, B of the two sub-filaments 2a, 2b are such that, at the contact surface 3, the sub-filaments 2a, 2b are adhered ("joined") to each other, i.e. the materials are "co-adhesive". Such adhesion between the two sub-filaments does not only occur after the co-extrusion, but also in the final non-woven fabric, i.e. in the first fabric 101. In other words, the treatments carried out on the multicomponent filaments 1 and on the first fabric 101 (as well as on the multilayer fabric 100) do not cause the separation of the sub-filaments 2a, 2b, i.e. they maintain the sub-filaments 2a, 2b adhered to each other.

According to a preferred aspect, there is at least one protrusion P1 of the first sub-filament 2a within the second sub-filament 2b. As discussed above, that portion of the first sub-filament 2a, comprised between the section of the contact surface 3 (i.e. the line defined by the contact surface shown in cross section) and the straight line R passing through the two ends 3a, 3b of the section of the contact surface 3, i.e. the points in which the section of the contact surface 3 reaches the edge of the filament section 2, will be defined as the protrusion P1.

The second sub-filament 2b, too, can form further protrusions P2, P3, i.e. portions of the second filament 2b comprised between the straight line R and the section of the contact surface 3. The protrusions P2, P3 are thus oriented in opposite way (i.e. they are arranged on the other side of the straight line R) with respect to the protrusion P1.

As better discussed hereunder, embodiments in which only a first sub-filament 2a forms a protrusion P1 within the second sub-filament 2b are anyhow possible. Typically, in such embodiments, the straight line R intersects the section of the contact surface 3 only at the ends 3a, 3b thereof.

Moreover, according to a possible aspect, the contact surface 3 changes its curvature at least once, i.e. has at least one inflection point. Preferably, the contact surface 3 (in section) has at least two inflections (or inflection points), f1, f2.

According to an aspect, the shape of the section of the contact surface 3 is such that the protrusion P1 has decreasing width L, i.e. so that to avoid the presence of undercuts. The width L of the protrusions is measured in a direction parallel to the straight line R passing through the two ends 3a, 3b of the section of the contact surface 3.

A section of the contact surface 3 having undercuts is in fact complex to obtain and is not effective during the crimping step of the filament 1 when, as in the present solution, the two sub-filaments 2a, 2b are adhered to each other.

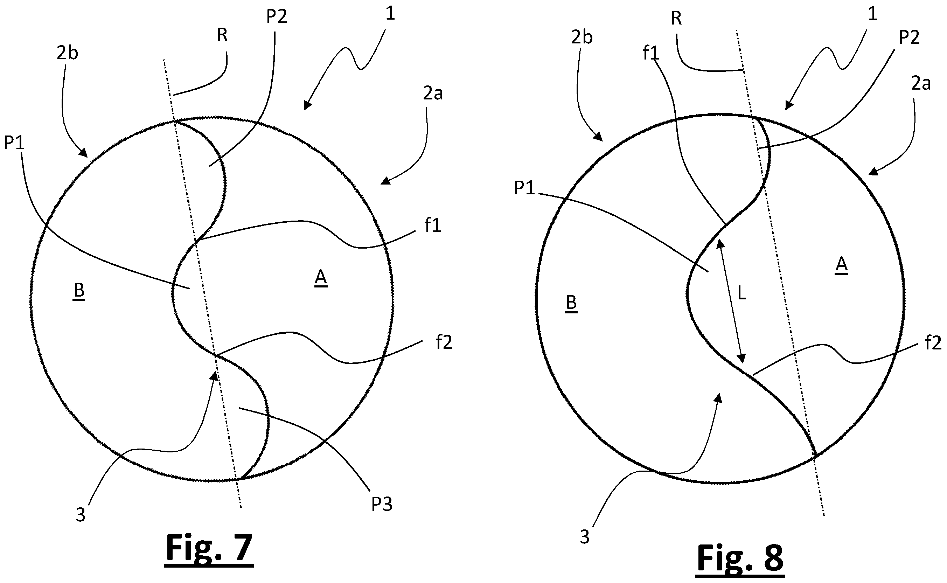

In the embodiment shown in figure 7, the ratio between the areas of the two sub-filaments 2a, 2b is of about 1:1. The filament section is typically substantially constant along the filament, thus such ratio is the ratio between the volumes of the two sub-filaments 2a, 2b in the filament 1.

However, preferably, the sub-filament of the material with lower melting temperature with respect to the melting temperature of the material of the other sub-filament is present in lower quantities with respect to the other sub-filament in the filament 1. A preferred volume ratio is thus equal to about 40% - 60%. However, in general, good crimping levels are achieved when the volume ratio between the two sub-filaments 2a, 2b is between 1:4 and 4:1. In other words, it is possible to vary the volume percentage of each of the two sub-filaments between 20% and 80% of the volume of the multicomponent filament.

The embodiments of figures 7 and 8 depict possible shapes of the section of the contact surface 3.

The protrusion P1 is preferably arranged in a substantially central position with respect to the filament section 1.

The second fabric 102 can be of different types, depending on the final use of the multilayer fabric 100.

The second fabric 102 can be, for example, a woven fabric, a knit fabric or a non-woven fabric.

In particular, in possible embodiments of the present invention, the second fabric 102 is a non-woven fabric.

The second fabric 102 can comprise mono-component filaments and/or bicomponent filaments. Possible mono-component filaments are made of PP, PE, PET, PA, PLA. Possible bicomponent filaments are made by combining PP/PP, PP/CoPP, PP/PE, PET/PET, PET/CoPET, PET/PBT, PET/PE. Typically, the bicomponent filaments of the second fabric 102 are of the core-sheath type.

Independently of the type of fabric, the second fabric is configured so that to shrink (i.e. contract) less than the first fabric 101, when heated at the same temperature, typically between 70° and 190°C.

More in detail, as mentioned above, the filaments 1 of the first fabric 101 crimp when heated. This causes an increase in the thickness of the first fabric 101 and a reduction in the length and width thereof. Such width and length reduction of the first fabric 101 is greater than the width and length reduction of the second fabric 102, when the latter is heated at the same temperature as that of the first fabric 101.

in particular, considering a 10x10 cm sample of the first fabric 101 and a 10×10 cm sample of the second fabric 102, both subjected to the same treatment, i.e. to heating at the same temperature for the same amount of time and to cooling at the same temperature for the same amount of time, the final dimensions (length and width) of the sample of the first fabric will be smaller than the final dimensions (length and width) of the second fabric.

Typically, the second fabric 102 is configured so that to have shrinkage equal to or less than 5%, preferably less than 1%.

The shrinkage of a 10x10 sample of the first fabric 101 is instead greater with respect to that of the second fabric 101, preferably greater than 5%, more preferably greater than 10%. Preferred values are between 10% and 60% of the initial value. The assembly of the two combined fabrics preferably has shrinkage greater than 3% when subjected to the same heat treatment.

At the same time, the thickness of the first fabric 101 increases due to heat treatment, with an increase of up to 300% more than the initial value (for example 1 to 4 mm). The heating used for the treatment described above is preferably a dry treatment, or anyhow a treatment that does not provide for the immersion of the samples in a liquid.

Moreover, the first and second fabric 101, 102 are selected so that the
second fabric 102 has a greater tensile strength than the first fabric, when such strengths are measured by means of the same test. In particular, the first and second fabric are preferably selected so that the specific toughness (typically measured in N/5cm) of the multilayer fabric is at least 2 times, preferably at least 3 times, greater than the specific toughness of the first fabric 101 in the Machine Direction, and so that the specific toughness of the multilayer fabric is at least 3 times, preferably at least 5 times greater than the specific toughness of the first fabric 101 in a direction orthogonal to the machine direction (i.e. in the Cross Direction). In the art, standards for measuring the tensile strength and/or toughness of a fabric are known, for example UNI EN 29073 Part 3.

These values are measured considering individually the various layers of the finished product, i.e. separately considering the tensile strength of the first fabric 101 and the second fabric 102 after heating. Such a difference can be measured, for example, by treating (heating) the first fabric 101 and the second fabric 102 without bonding them to each other, or by treating the two fabrics individually.

As previously discussed, the first fabric 101 is composed at least in part of bi-component filaments, having a first sub-filament which forms a protrusion within the second sub-filament, forming a contact surface which, in section, has at least one inflection point f1, f2 and preferably at least two inflection points f1, f2.

This solution allows to obtain a first fabric 101 which, during heating, provides a high crimping of the relevant filaments, so that during heating, the first fabric presents high swelling (i.e. increase in thickness) and shrinkage in length and/or width. Thanks to this solution, the final multilayer fabric 100 has very marked surface effects, in particular providing a greater protrusion of the swollen areas R with respect to the surface of the multilayer fabric 100.

Moreover, the second fabric 102 has a tenacity that is enough to provide the desired mechanical properties to the multilayer fabric 100. It is therefore preferable not to over-stiffen the multilayer fabric 100, so as to preserve flexibility and comfort for a user.

According to a preferred aspect, the first fabric 101 is composed at least in part of bicomponent filaments having at least an inflection point f1, f2 in the contact surface and, in the multilayer fabric 100, the ratio between the tensile strength of the first and second fabric 101, 102 is such that the tensile strength of the second fabric 102 is 5 to 10 times greater in the machine direction and 12 to 20 times greater in the cross direction, i.e. in the direction orthogonal to the machine direction, with respect (respectively) to the tensile strength in the machine direction and in the cross direction of the first fabric 101. The tensile strength can be measured in different ways known in the art, preferably according to UNI EN 29073 Part 3.

These values preferably apply also to the ratio between the tensile strength of the third fabric 103 (if present) with respect to the first fabric 101.

It should be noted how the strength of the multilayer fabric is determined not only by the mechanical properties of the fabrics 101, 102 composing it, but also by the particular constraint used to join them. As better discussed hereunder, in fact, the fabrics 101, 102 are joined by means of a plurality of constraining zones (P). Various parameters, among which typically the density and arrangement, of the constraining zones can be modified so that to influence the strength of the multilayer fabric 100. A multilayer fabric 100 according to the invention is achieved by superimposing, constraining and subsequently heating a first fabric 101 and a second fabric 102 as discussed above.

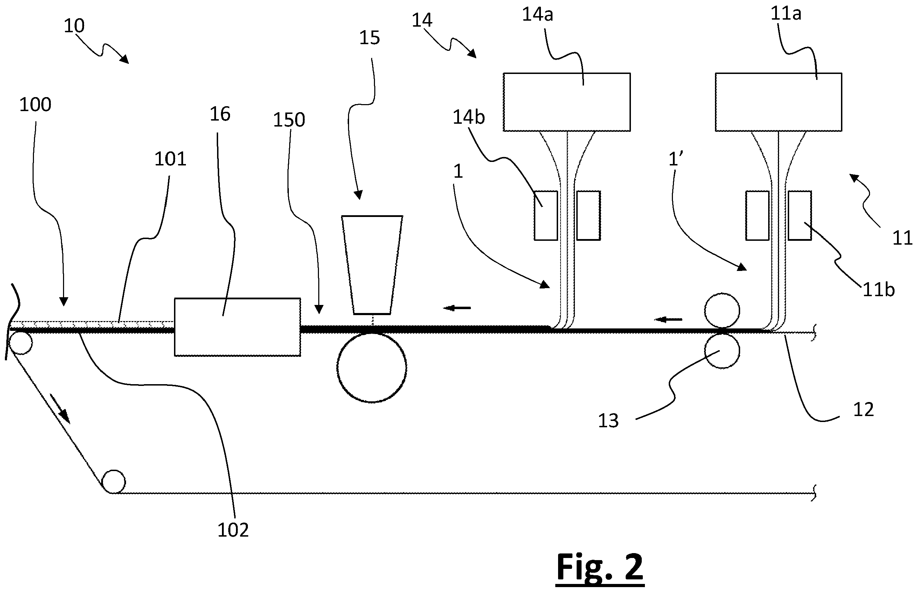

According to a possible aspect, as in the embodiment of figure 2, it is possible to produce the first fabric 101 and the second fabric 102 in line, i.e. in the same plant, so that to be able to send them to a constraining device 15 after the production, as better discussed hereunder.

In particular, according to possible embodiments, an apparatus 10 for producing a multilayer fabric 100 comprises a first device 11 for the production of the second fabric 102, and a second device 14 for the production of the first fabric 101, arranged downstream of the first device 11.

A first device 11 is thus provided for the production of filaments 1' and to deposit them on a collecting surface 12. Various devices 11 known in the art can be used for the purpose. For example, the devices described in the patent applications WO2008/072278 and WO2008/075176 can be used.

In general, such devices have a spinneret or extrusion device 11a to extrude a plurality of filaments 1'.

The spinneret 11a is typically followed by a drawing unit 11b. Generally, a cooling zone, not shown and known per se in the art, is arranged upstream the drawing unit to direct air flows towards the filaments 1 following the extrusion from the spinneret 11a, so that to appropriately cool them. A possible cooling chamber usable in the present invention is, for example, described in the patent EP1939334; this patent also describes a filament collecting surface adapted to be used in the present invention. In general, a collecting surface 12, in general in the form of a conveyor belt or similar mobile element, is typically present underneath the extrusion device 11a. The collecting surface 12 is typically provided with holes or anyhow permeable to gas. Specific devices not shown in detail and typically in the form of an aspirator or similar element, can be provided in a known way underneath the collecting surface 12 so that to create a depression at the zone in which the filaments 1' are deposited thereon. The filaments 1' are thus typically consolidated, for example by calendering, by means of rollers 13, so that to form the second fabric 102, and in particular a fabric having high mechanical properties, in particular tensile strength, or anyhow with greater mechanical properties than those of the first fabric 101.

As discussed above, according to an aspect, the first fabric 101 can be deposited on the second fabric 102, which thus acts as a collecting surface for the first fabric 101. Similarly to that which was previously discussed for the second fabric 102, the second device 14 comprises a spinneret 14a.

Preferably, the spinneret 14a is configured so that to produce filaments 1 for the first fabric 101 which have the above-described conformation, i.e. with a first sub-filament which forms a protrusion within the second sub-filament, forming a contact surface which, in section, has at least one inflection point f1, f2. Preferably, such conformation is obtained by locally varying the pressure of extrusion in different zones of the section of at least one of the sub-filaments 2a, 2b.

As for the first device 11, the spinneret 14a is typically followed by a drawing unit 14b, and a cooling zone, not shown and known per se in the art, is arranged upstream of the drawing unit to direct air flows towards the filaments 100 following the extrusion from the spinneret 14a.

The filaments 1 are thus deposited on the second fabric 102, so that to form the first fabric 101 above the second fabric 102.

According to a possible aspect of the present invention, unlike known solutions, such as the ones described in US2009152757 and US2008210363, the filaments 100 deposited on the collecting means 2 are deposited in non-crimped condition, i.e. are substantially free from crimps when they are deposited on the collecting means 2. The non-woven fabric 150 deposited on the collecting means 2 thus has a thickness typically comparable to that of the standard non-woven spunbond fabrics obtained with mono- and bicomponent filaments.

Different solutions can however be provided.

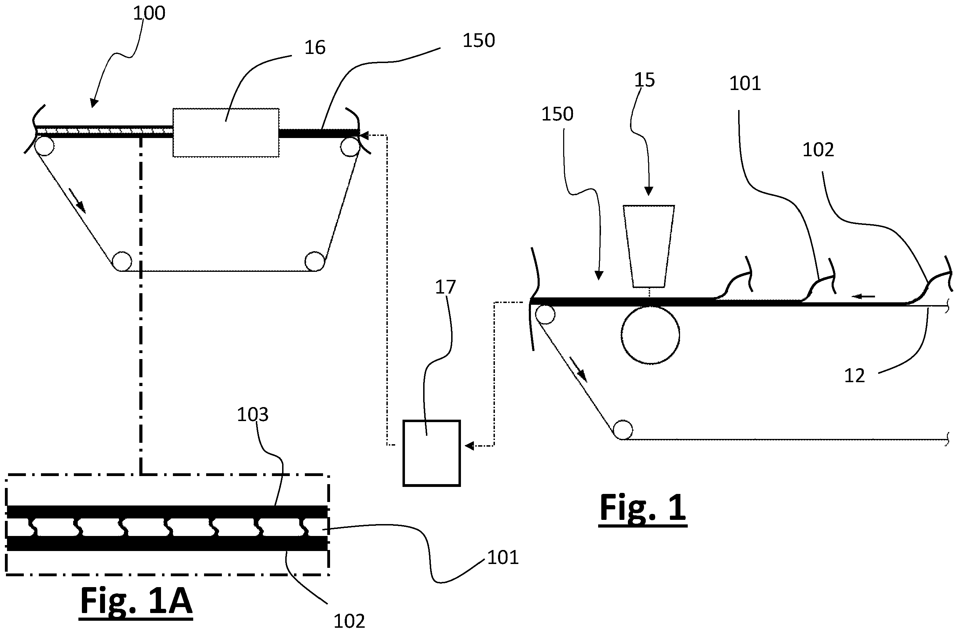

For example, in figure 1, a possible embodiment in which the first fabric 101 and the second fabric 102 are produced in a different plant, or anyhow at different stations, and then fed in series to a collecting surface 12, is schematized. In similar embodiments, it is for example possible to use a second fabric 102 which is not a non-woven fabric, for example a woven fabric or a knit fabric.

In possible variants, it is also possible to arrange the second fabric 102 above the first fabric 101.

Further solutions, not shown in detail, are possible, in particular combinations of the embodiments discussed above.

For example, it is possible to arrange the second fabric 102 already formed on a collecting surface 12 (for example a woven fabric obtained on a specific loom) and to arrange the first fabric 101 thereon, by depositing the filaments 1 produced by a device 14 similar to the one previously described.

Similarly, it is possible to provide a first device 12 similar to the one described above to produce a second fabric, and to arrange a first fabric 101 above it, previously produced in a different plant or machine.

In general, in a first step of a method according to the present invention, the first fabric 101 and a second fabric 102, having the characteristics discussed above, are arranged one on top of the other, typically so that the second fabric 102 is arranged underneath the first fabric 101.

The first fabric 101 and the second fabric 102 are thus constrained to each other by a constraining device 15.

The constraining device 15 is configured so that to define a plurality of constraining points or zones P between the first fabric 101 and the second fabric 102.

The constraining device 15 is preferably selected among a needle loom (a needler or machine for "needle punching"), a device to carry out an ultrasonic bonding, a device to feed glue, a device to carry out a seam between the first and the second fabric. Preferably, the constraining device 15 is an ultrasonic device known in the art: for example ultrasonic devices are discussed in GB1243315, and their use is for example mentioned in US2019/0117478.

In general, the first fabric 101 and the second fabric 102 are joined by a plurality of constraining zones P, generally in the form of points.

According to a possible aspect, such constraining points or zones P are arranged along imaginary lines L, preferably straight or curved lines, so that to define a plurality of closed shapes F. Such lines are typically arranged so that to intersect each other.

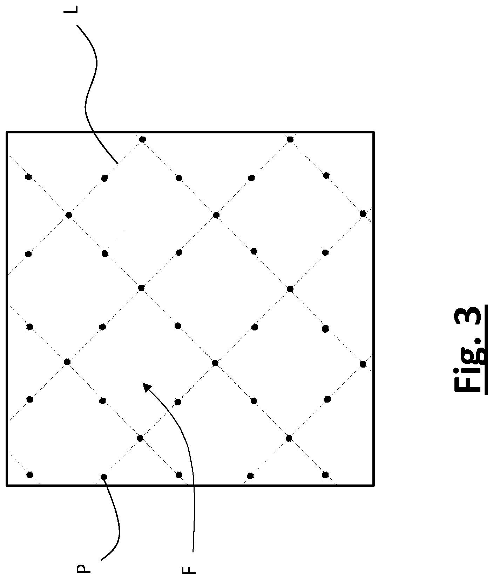

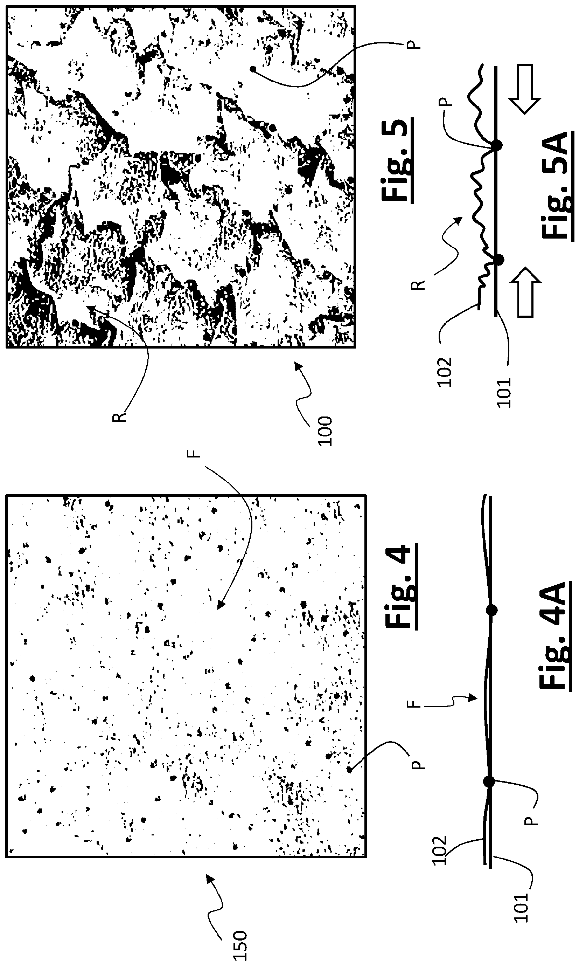

In general, the constraining points or zones P (hereinafter also only named "constraining points") are preferably arranged along the perimeter of a plurality of closed shapes F (for example squares in figure 3, rectangles in figure 4), which are typically adjacent to each other.

According to an aspect, considering a finished multilayer fabric 100, the sum of the areas of the constraining zones P covers an area of less than 15% of the total surface of a face of the multilayer fabric 100.

According to a possible aspect, considering a finished multilayer fabric 100, the sum of the areas of the closed figures F is equal to at least 50% of the total surface of a face of the multilayer fabric 100, preferably at least 80% of such surface.

It should be noted that the coupling of a first fabric 101 with a second fabric 102 has been described in detail.

It is however possible to add further fabrics, so that to form further "layers" of the multilayer fabric 100.

For example, in possible embodiments, a third fabric 103 can be added to the first and second fabric, typically so that to arrange the first fabric between the second fabric 102 and the third fabric 103.

The second fabric and the third fabric can be identical.

In general, it is preferable for the first fabric 101 to be configured so that to shrink more than both the second fabric 102 and the third fabric 103 due to a heat treatment.

The assembly formed by the first and the second fabric (and possible further fabrics) coming out of the constraining device will be henceforth named "semi-finished fabric" 150 for simplicity.

Preferably, the thickness of the semi-finished fabric 150 is lower than 40 mm, preferably lower than 30 mm.

If an ultrasonic bonding device is used, the thickness of the semi-finished fabric is preferably lower than 20 mm, preferably lower than 15 mm.

According to the invention, the semi-finished fabric 150 is then fed to a heating device 16.

According to possible embodiments, the heating can be carried out in line with the constraining by means of the same plant, or anyhow substantially immediately after having carried out the constraining by means of the constraining device 15, as shown for example in figure 2.

Nonetheless, a possible aspect of the present invention provides that the semi-finished fabric 150 is arranged on a storage device 17, for example a bobbin, and transported in a different plant to carry out the heating discussed above, as for example in the embodiment shown in figure 1.

In particular, such solution allows to transport the semi-finished fabric 150, i.e. a fabric in which the semi-finished fabric still has not increased its volume (in particular its thickness), as better discussed hereunder, by incorporating air in the fabric itself.

It should be noted that "heating device 16" means any apparatus adapted to heat the semi-finished product 150, in one or more steps, preferably in a dry way or without immersing it in a liquid, at a temperature sufficient to cause the crimping of the filaments of the first fabric of the semi-finished fabric 150. Such apparatus can provide a single element adapted to heat the semi-finished fabric or more heating elements in series.

In general, various types of heating devices known in the art, and thus not discussed in detail, can be used.

It should be noted that, for simplicity of description, the semi-finished fabric 150 will be referred to in order to denote the fabric before heating, and to multilayer fabric 100 to denote the fabric following the heating. This does not necessarily imply that the fabric coming out of the heating device 16 is the finished product, so further treatments can be applied to the fabric coming out of the heating device 16 before obtaining the final fabric.

Typically, the heating device 16 comprises at least one environment 16a within which the semi-finished fabric 150 is arranged for a period of time. The temperature of such environment 16a is preferably between 70 and 190°C.

As discussed above, the heating preferably does not occur by means of immersion in a hot liquid, but is typically carried out by directing an air flow against the semi-finished fabric 150.

In general, the semi-finished fabric 150 is heated in one or more steps, so that to cause a greater shrinking, i.e. contraction, of the first fabric 101 with respect to the shrinking of the second fabric 102 (and also to the third fabric 103 if present).

A possible heat treatment can for example be carried out by means of a crossing-air oven, known in the art.

Preferably, the heat treatment comprises a heating between 5" and 120", with a temperature between 80 to 190°C. Such treatment can be used for the above mentioned verification of the difference between the shrinkage of the first and second fabric.

As discussed above, in the absence of external constraints, such shrinkage occurs in direction of the width and length of the semi-finished fabric 150. Instead, with regard to the thickness, the first fabric 101 typically increases its thickness, while the second fabric typically has a substantially unchanged thickness after the heating.

As a result, the second fabric 102 follows the shrinking of the first fabric 101 due to the presence of the constraining points P, i.e. the fabrics remain integral at the constraining points while the zones of the second fabric 102 not constrained to the first fabric 101 are free to move with respect to it.

As a result, the second fabric 102 bends, so that the surface of the second fabric is greater with respect to that of the first fabric 101, which is instead contracted.

Typically, the shrinking of the multilayer fabric 100 is lower than the shrinking that the first fabric 101 would have without the presence of the second fabric 102 (and of possible further fabrics). In possible embodiments, the shrinking of the multilayer fabric is equal to about half of the shrinking the single first fabric 101 would have with the same treatment.

The shape, and in particular the distribution, of the constraining points P thus allows to define the appearance of the multilayer fabric 100. As discussed above, the conformation and distribution of the constraining points P allows to define (or anyhow influence) the mechanical properties (toughness, rigidity, etc.) of the multilayer fabric.

In possible embodiments, according to a possible aspect, such as for example shown in figures 4 and 5, the closed figures F defined by the constraining points P are free to move, so that to form bulgy zones R. Such bulgy zones are portions of the second fabric 102 which, due to the shrinking of the first fabric 101, tend to protrude outwards, i.e. tend to protrude from the surface of the multilayer fabric 100, so that to form "bubbles" or "pockets".

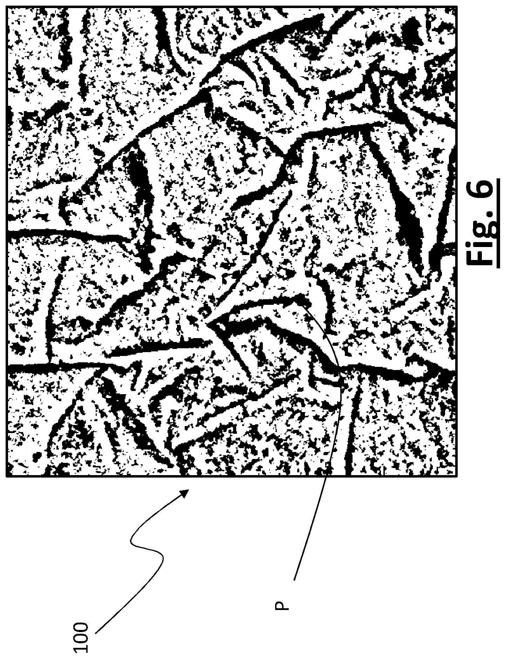

According to possible alternatives, by suitably arranging the constraining points P, it is possible to obtain folds arranged substantially randomly, along the second fabric 102, such as for example shown in figure 6. In particular, the fabric of figure 6 is the result of the heating of a semi-finished fabric 150 in which the constraining points P were arranged only at the vertexes of the closed figures F shown in figure 4. Further variants are possible, not shown in the figures, with different arrangements of the constraining points P between the first and second fabric 101, 102.

If a third fabric 103 is present, the aesthetic effect discussed above can be obtained on both faces of the multilayer fabric 100.

## Claims

1. Process for the production of a multilayer fabric (100) comprising the steps of:
(a) feeding at least a first fabric (101) and a second fabric (102) to a constraining device (15), wherein the first fabric (101) is a non-woven fabric, comprising a plurality of filaments (1) adapted to be crimped, preferably bicomponent filaments;
(b) constraining said first and said second fabric (101, 102) to each other, so that to define a plurality of constraining points or zones (P) between said first fabric (101) and said second fabric (102), and so that said first and second fabric (101, 102) are superimposed;
(c) heating said first and second fabric (101, 102), so that the filaments (1) of the first fabric (101) develop a crimp, thus increasing the thickness of the first fabric (101) and shrinking the length and the width of the first fabric (101), the shrinking of the first fabric (101) being greater than the shrinking of the second fabric (102),
wherein the tensile strength of the first fabric (101) is lower than the tensile strength of the second fabric (102).

2. Process according to claim 1, wherein said step (c) is carried out in a different plant with respect to said steps (a) and (b).

3. Process according to claim 1 or 2, wherein between said steps (b) and (c) a step is carried out of storing the semi-finished fabric (150) obtained from said step (a), and of transporting said semi-finished fabric (150) to a plant for carrying out said step (c).

4. Process according to one of the preceding claims, wherein said constraining points or zones (P) are arranged along lines (L) adapted to define, in a plan view, a plurality of closed figures (F) so that, due to the greater shrinking of the first fabric (101) with respect to the second fabric (102) during said heating step, bulgy zones (R) form in the second fabric (102) at said plurality of closed figures (F).

5. Process according to one of the preceding claims, comprising a third fabric (103) wherein, in said step (b), the first fabric (101) is constrained to said second and third fabric (103) by said constraining device (15), so that to be interposed between said second and said third fabric (103), and in said step (c), the first fabric (101) shrinks more than both the second fabric (102) and the third fabric (103), the shrinking of the second and third fabric (102, 103) preferably being substantially identical.

6. Process according to claim 5, wherein the tensile strength of the first fabric (101) is lower than the tensile strength of the third fabric (103).

7. Process according to one of the preceding claims, wherein said constraining device (15) is selected from a needle loom, a device adapted to supply glue, a device adapted to carry out an ultrasonic bonding, or a device adapted to apply a seam, said device preferably being a device adapted to carry out an ultrasonic bonding.

8. Process according to one of the preceding claims, wherein said step (a) comprises the step (i) of depositing a plurality of filaments (1) adapted to be crimped on a first deposit surface so that to form said first fabric (101).

9. Process according to claim 8, wherein said step (a) comprises the steps of:
(a') depositing a plurality of filaments (1') on a second deposit surface (12);
(a") consolidating said plurality of filaments (1') to each other, preferably by calendering, to obtain said second fabric (102);
(a‴) carrying out said step (i) to obtain said first fabric (101), wherein said second fabric (102) acts like a first deposit surface.

10. Process according to claim 8 or 9, wherein during said step (i), at least part, preferably all of the filaments adapted to be crimped is/are coextruded from two different materials (A, B), so that to form two sub-filaments (2a, 2b) adhered to each other, according to the side-by-side arrangement, in which, in section, the contact surface (3) between a first sub-filament (2a) and a second sub-filament (2b) has at least one inflection point (f1, f2), and wherein the first sub-filament (2a) forms at least one protrusion (P1) inside the second filament (2b), said protrusion (P) having a decreasing width (L).

11. Process according to claim 10, wherein following said step (c), the tensile strength of the second fabric (102) is 5 to 10 times greater in the machine direction and 12 to 20 times greater in the direction orthogonal to the machine direction, with respect to the corresponding tensile strength of the first fabric (101).

12. Multilayer fabric (100) comprising a first fabric (101) and a second fabric (102) superimposed onto each other, wherein said first fabric (101) is a non-woven fabric comprising a plurality of filaments, said first fabric (101) and said second fabric (102) being constrained to each other in a plurality of constraining points or zones (P), said first and second fabric (102) being configured so that, following a heating, the filaments of the first fabric (101) develop a crimp, thus increasing the thickness of the first fabric (101) and shrinking the length and the width of the first fabric (101), the shrinking of the first fabric (101) being greater than the shrinking of the second fabric (102), wherein the tensile strength of the first fabric (101) is lower than the tensile strength of the second fabric (102).

## Patentansprüche

1. Verfahren zur Herstellung eines mehrschichtigen Gewebes (100), umfassend die Schritte:
(a) Zuführen von mindestens einem ersten Gewebe (101) und einem zweiten Gewebe (102) zu einer Zwingvorrichtung (15), wobei das erste Gewebe (101) ein Vliesstoff ist, der eine Vielzahl von zum Kräuseln geeigneten Filamenten (1), vorzugsweise Bikomponentenfilamenten, umfasst;
(b) Aneinanderzwingen des ersten und des zweiten Gewebes (101, 102), so dass eine Vielzahl von Zwingpunkten oder -zonen (P) zwischen dem ersten Gewebe (101) und dem zweiten Gewebe (102) definiert wird, und so dass das erste und das zweite Gewebe (101, 102) übereinander liegen;
(c) Erwärmen des ersten und zweiten Gewebes (101, 102), so dass die Filamente (1) des ersten Gewebes (101) eine Kräuselung entwickeln, wodurch die Dicke des ersten Gewebes (101) erhöht und die Länge und Breite des ersten Gewebes (101) geschrumpft werden, wobei die Schrumpfung des ersten Gewebes (101) größer als die Schrumpfung des zweiten Gewebes (102) ist,
wobei die Zugfestigkeit des ersten Gewebes (101) geringer als die Zugfestigkeit des zweiten Gewebes (102) ist.

2. Verfahren nach Anspruch 1, wobei der Schritt (c) in einer anderen Anlage als die Schritte (a) und (b) durchgeführt wird,

3. Verfahren nach Anspruch 1 oder 2, wobei zwischen den Schritten (b) und (c) ein Schritt ausgeführt wird, bei dem das in Schritt (a) erhaltene halbfertige Gewebe (150) gelagert und das halbfertige Gewebe (150) zu einer Anlage zur Ausführung des Schritts (c) transportiert wird,

4. Verfahren nach einem der vorhergehenden Ansprüche, wobei die Zwingpunkte oder -zonen (P) entlang von Linien (L) angeordnet sind, die dazu geeignet sind, in einer Draufsicht eine Vielzahl geschlossener Figuren (F) zu definieren, so dass sich aufgrund der stärkeren Schrumpfung des ersten Gewebes (101) im Vergleich zum zweiten Gewebe (102) während des Erwärmungsschritts bauchige Zonen (R) im zweiten Gewebe (102) an der Vielzahl geschlossener Figuren (F) bilden.

5. Verfahren nach einem der vorhergehenden Ansprüche, umfassend ein drittes Gewebe (103), wobei in dem Schritt (b) das erste Gewebe (101) durch die Zwingvorrichtung (15) an das zweite und dritte Gewebe (103) gezwungen wird, so dass es zwischen das zweite und das dritte Gewebe (103) eingefügt wird, und wobei in dem Schritt (c) das erste Gewebe (101) stärker schrumpft als sowohl das zweite Gewebe (102) als auch das dritte Gewebe (103), wobei das Schrumpfen des zweiten und dritten Gewebes (102, 103) vorzugsweise im Wesentlichen identisch ist.

6. Verfahren nach Anspruch 5, wobei die Zugfestigkeit des ersten Gewebes (101) geringer als die Zugfestigkeit des dritten Gewebes (103) ist.

7. Verfahren nach einem der vorhergehenden Ansprüche, wobei die Zwingvorrichtung (15) aus einer Nadelmaschine, einer Vorrichtung zum Zuführen von Klebstoff, einer Vorrichtung zum Durchführen einer Ultraschallverbindung oder einer Vorrichtung zum Anbringen einer Naht ausgewählt ist, wobei die Vorrichtung vorzugsweise eine Vorrichtung zum Durchführen einer Ultraschallverbindung ist.

8. Verfahren nach einem der vorhergehenden Ansprüche, wobei der Schritt (a) den Schritt (i) des Ablegens einer Vielzahl von Filamenten (1), die zum Kräuseln geeignet sind, auf einer ersten Ablagefläche umfasst, um das erste Gewebe (101) zu bilden.

9. Verfahren nach Anspruch 8, wobei der Schritt (a) die folgenden Schritte umfasst:
(a') Ablegen einer Vielzahl von Filamenten (1') auf einer zweiten Ablagefläche (12);
(a") Verfestigen der Vielzahl von Filamenten (1') miteinander, vorzugsweise durch Kalandrieren, um das zweite Gewebe (102) zu erhalten;
(a‴) Durchführen des Schritts (i), um das erste Gewebe (101) zu erhalten, wobei das zweite Gewebe (102) als eine erste Ablagefläche wirkt.

10. Verfahren nach Anspruch 8 oder 9, wobei während des Schritts (i) zumindest ein Teil, vorzugsweise alle der zum Kräuseln geeigneten Filamente aus zwei verschiedenen Materialien (A, B) koextrudiert werden, um zwei gemäß der Anordnung nebeneinander aneinander haftende Unterfilamente (2a, 2b) zu bilden, wobei im Querschnitt die Kontaktfläche (3) zwischen einem ersten Unterfilament (2a) und einem zweiten Unterfilament (2b) mindestens einen Wendepunkt (f1, f2) aufweist, und wobei das erste Unterfilament (2a) innerhalb des zweiten Filaments (2b) mindestens einen Vorsprung (P1) bildet, wobei der Vorsprung (P) eine abnehmende Breite (L) aufweist.

11. Verfahren nach Anspruch 10, wobei nach dem Schritt (c) die Zugfestigkeit des zweiten Gewebes (102) in Maschinenrichtung 5- bis 10-mal größer und in der zur Maschinenrichtung senkrechten Richtung 12-bis 20-mal größer ist als die entsprechende Zugfestigkeit des ersten Gewebes (101).

12. Mehrschichtiges Gewebe (100), das ein erstes Gewebe (101) und ein zweites Gewebe (102) umfasst, die übereinander gelegt sind, wobei das erste Gewebe (101) ein Vliesstoff ist, der eine Vielzahl von Filamenten umfasst, wobei das erste Gewebe (101) und das zweite Gewebe (102) an einer Vielzahl von Zwingpunkten oder -zonen (P) aneinander gezwungen sind, wobei das erste und das zweite Gewebe (102) so konfiguriert sind, dass die Filamente des ersten Gewebes (101) nach einer Erwärmung eine Kräuselung entwickeln, wodurch die Dicke des ersten Gewebes (101) erhöht ist und die Länge und Breite des ersten Gewebes (101) geschrumpft ist, wobei die Schrumpfung des ersten Gewebes (101) größer ist als die Schrumpfung des zweiten Gewebes (102), wobei die Zugfestigkeit des ersten Gewebes (101) geringer als die Zugfestigkeit des zweiten Gewebes (102) ist.

## Revendications

1. Procédé de production d'un tissu multicouche (100) comprenant les étapes consistant à :
(a) introduire au moins un premier tissu (101) et un second tissu (102) dans un dispositif de contrainte (15), dans lequel le premier tissu (101) est un tissu non tissé, comprenant une pluralité de filaments (1) adaptés pour être ondulés, de préférence des filaments bicomposants ;
(b) contraindre ledit premier et ledit second tissu (101, 102) l'un à l'autre, de manière à définir une pluralité de points ou zones de contrainte (P) entre ledit premier tissu (101) et ledit second tissu (102), et de manière à ce que lesdits premier et second tissus (101, 102) soient superposés ;
(c) chauffer lesdits premier et second tissus (101,102), de sorte que les filaments (1) du premier tissu (101) développent une ondulation, augmentant ainsi l'épaisseur du premier tissu (101) et rétrécissant la longueur et la largeur du premier tissu (101), le rétrécissement du premier tissu (101) étant plus important que le rétrécissement du second tissu (102),
dans lequel la résistance à la traction du premier tissu (101) est inférieure à la résistance à la traction du second tissu (102).

2. Procédé selon la revendication 1, dans lequel ladite étape (c) est effectuée dans une usine différente des étapes (a) et (b).

3. Procédé selon la revendication 1 ou 2, dans lequel, entre lesdites étapes (b) et (c), on procède au stockage du tissu semi-fini (150) obtenu à l'issue de l'étape (a), et au transport dudit tissu semi-fini (150) vers une usine pour la réalisation de l'étape (c).

4. Procédé selon l'une quelconque des revendications précédentes, dans lequel lesdits points ou zones de contrainte (P) sont disposés le long de lignes (L) aptes à définir, en vue de dessus, une pluralité de figures fermées (F) de sorte que, du fait de la plus grande rétraction du premier tissu (101) par rapport au second tissu (102) au cours de ladite étape de chauffage, des zones bombées (R) se forment dans le second tissu (102) au niveau de ladite pluralité de figures fermées (F).

5. Procédé selon l'une quelconque des revendications précédentes, comprenant un troisième tissu (103) dans lequel, dans ladite étape (b), le premier tissu (101) est contraint aux deuxième et troisième tissus (103) par ledit dispositif de contrainte (15), de manière à être interposé entre les deuxième et troisième tissus (103), et dans ladite étape (c), le premier tissu (101) rétrécit plus que le deuxième tissu (102) et le troisième tissu (103), le rétrécissement des deuxième et troisième tissus (102, 103) étant de préférence substantiellement identique.

6. Procédé selon la revendication 5, dans lequel la résistance à la traction du premier tissu (101) est inférieure à la résistance à la traction du troisième tissu (103).

7. Procédé selon l'une des revendications précédentes, dans lequel ledit dispositif de contrainte (15) est choisi parmi un métier à aiguilles, un dispositif apte à fournir de la colle, un dispositif apte à effectuer un collage par ultrasons, ou un dispositif apte à appliquer une couture, ledit dispositif étant de préférence un dispositif apte à effectuer un collage par ultrasons,

8. Procédé selon l'une des revendications précédentes, dans lequel ladite étape (a) comprend l'étape (i) de dépôt d'une pluralité de filaments (1) aptes à être sertis sur une première surface de dépôt de manière à former ledit premier tissu (101).

9. Procédé selon la revendication 8, dans lequel ladite étape (a) comprend les étapes consistant à :
(a') déposer une pluralité de filaments (1') sur une deuxième surface de dépôt (12) ;
(a") consolider ladite pluralité de filaments (1') entre eux, de préférence par calandrage, pour obtenir ledit second tissu (102) ;
(a‴) effectuer ladite étape (i) pour obtenir ledit premier tissu (101), dans lequel ledit second tissu (102) agit comme une première surface de dépôt.

10. Procédé selon la revendication 8 ou 9, dans lequel au cours de ladite étape (i), au moins une partie, de préférence la totalité des filaments aptes à être sertis est/sont coextrudée(s) à partir de deux matériaux différents (A, B), de manière à former deux sous-filaments (2a, 2b) collés l'un à l'autre, selon la disposition côte à côte, dans laquelle, en coupe, la surface de contact (3) entre un premier sous-filament (2a) et un second sous-filament (2b) présente au moins un point d'inflexion (f1, f2), et dans lequel le premier sous-filament (2a) forme au moins une protubérance (P1) à l'intérieur du second filament (2b), ladite protubérance (P) ayant une largeur décroissante (L).

11. Procédé selon la revendication 10, dans lequel, après ladite étape (c), la résistance à la traction du second tissu (102) est de 5 à 10 fois supérieure dans la direction de la machine et de 12 à 20 fois supérieure dans la direction orthogonale à la direction de la machine, par rapport à la résistance à la traction correspondante du premier tissu (101).

12. Tissu multicouche (100) comprenant un premier tissu (101) et un second tissu (102) superposés l'un sur l'autre, dans lequel ledit premier tissu (101) est un tissu non tissé comprenant une pluralité de filaments, ledit premier tissu (101) et ledit second tissu (102) étant contraints l'un à l'autre dans une pluralité de points ou zones de contrainte (P), lesdits premier et second tissus (102) étant configurés de telle sorte que, suite à un échauffement, les filaments du premier tissu (101) développent une ondulation, augmentant ainsi l'épaisseur du premier tissu (101) et rétrécissant la longueur et la largeur du premier tissu (101), le rétrécissement du premier tissu (101) étant supérieur au rétrécissement du second tissu (102), dans lequel la résistance à la traction du premier tissu (101) est inférieure à la résistance à la traction du second tissu (102).
